# EUROPÄISCHE PATENTSCHRIFT

(11) **EP 1 764 589 B1**
(45) Veröffentlichungstag und Bekanntmachung des Hinweises auf die Patenterteilung: **06.11.2013**
(21) Anmeldenummer: 06011885.8
(22) Anmeldetag: 09.06.2006
(51) Int. Cl.: G01F 1/84, G01F 25/00

(54) **Verfahren zur Prüfung eines Coriolis-Massendurchflussmessgeräts**
Method of testing of a Coriolis type mass flowmeter
Procédé pour le contrôle d'un débitmètre massique à effet Coriolis

(30) Priorität: 14.09.2005 DE 102005044008
(43) Veröffentlichungstag der Anmeldung: 21.03.2007
(73) Patentinhaber: Krohne AG, 4019 Basel (CH)
(72) Erfinder: Baker, Roger Dr., Cambridge (GB); Wang, Tao Dr., Wellingborough Northamptonshire (GB); Hussain, Yousif Dr., Northampton Northants (GB); Woodhouse, Jim Dr., Cambridge Cambridgeshire (GB)
(74) Vertreter: Gesthuysen Patent- und Rechtsanwälte

(56) Entgegenhaltungen:
- EP-A- 0 306 110
- EP-A- 0 462 711
- EP-A- 0 816 807
- DE-A1- 10 356 383
- DE-A1- 19 840 904
- DE-C1- 10 138 323

## Beschreibung

Die Erfindung betrifft ein Verfahren zur Prüfung eines Massendurchflußmeßgeräts, das nach dem Coriolis-Prinzip arbeitet, wobei eine Einrichtung des Massendurchflußmeßgeräts eine vorbestimmte Schwingungsanregung erfährt, die damit verbundene Schwingungsantwort erfaßt wird und die erfaßte Schwingungsantwort mit einer zuvor erfaßten Schwingungsantwort verglichen wird.

Coriolis-Massendurchflußmeßgeräte weisen im allgemeinen ein Meßrohr oder mehrere Meßrohre auf, die im Meßbetrieb zu Schwingungen angeregt werden. Ein das Meßrohr bzw. die Meßrohre durchströmendes Medium, dessen Massendurchfluß bestimmt werden soll, erfährt dabei eine Coriolis-Kraft, die zu einer Änderung der Schwingungsauslenkung gegenüber der Schwingungsanregung des Meßrohrs bzw. der Meßrohre führt. Diese Änderung wird z. B. in Form einer Phasendifferenz eines schwingenden Meßrohrs an voneinander beabstandeten Stellen zur direkten Bestimmung des Massendurchflusses verwendet.

Problematisch bei Coriolis-Massendurchflußmeßgeräten ist nun, daß bei ihrem Einsatz im Laufe der Zeit Veränderungen stattfinden können, die einen genauen Meßbetrieb nicht mehr gewährleisten. In einem solchen Fall ist im allgemeinen eine Nachkalibrierung des Massendurchflußmeßgeräts erforderlich.

Um diesem Problem abzuhelfen, insbesondere nämlich um einen Zustand zu erfassen, der eine derartige Nachkalibrierung erfordert, ist in der US 6,092,409 vorgeschlagen worden, ein Verfahren der eingangs genannten Art anzuwenden, wobei ein Meßrohr des Coriolis-Massendurchflußmeßgeräts im von einem Medium durchströmten Zustand zu Schwingungen angeregt wird und über die Auswertung der erfaßten Schwingungen auf die Dichte des strömenden Mediums rückgeschlossen wird. Bei bekannter Dichte des strömenden Mediums kann auf diese Weise die Genauigkeit des Coriolis-Massendurchflußmeßgeräts im Meßbetrieb ermittelt werden. Gegebenenfalls kann damit ein Warnsignal ausgegeben werden, das angibt, daß das Massendurchfiußmeßgerät nicht mehr hinreichend genau mißt und einer Nachkalibrierung oder Untersuchung hinsichtlich eines möglichen Fehlers unterzogen werden muß. Problematisch bei diesem aus dem Stand der Technik bekannten Verfahren ist jedoch, daß die Dichte des strömenden Mediums bekannt sein muß.

Die EP 0 816 807 A2 beschreibt ein Verfahren zur Erkennung von leistungsmindernden Einflüssen im Betrieb eines Coriolis-Massendurchflußmeßgeräts, das grundsätzlich darauf beruht, die Änderungsrate zweier unterschiedlicher Signale im Zusammenhang mit einer Bewegung des Meßrohrs miteinander zu vergleichen. Insgesamt werden drei Varianten offenbart: In einer ersten Variante wird das Verhältnis der Resonanzfrequenzen von zwei unterschiedlichen Schwingungsmoden überwacht. In einer weiteren Variante wird der Rauschanteil eines Frequenzspektrums ausgewertet. In der dritten Umsetzung wird ein Dämpfungsfaktor überwacht.

Eine Vorhersage über den jeweiligen mechanischen Zustand des Messrohrs eines Coriolis-Massendurchflußmeßgeräts ermöglicht gemäß der DE 103 56 383 A1 eine Analyseeinheit, die einen einmaligen Schwingungsimpuls an das Rohr abgibt. Aus der erfassten Schwingungsantwort des Rohres wird mittels der Analyseeinheit die aktuelle Dämpfungskonstante des Rohres berechnet und diese mit einer hinterlegten, ursprünglichen Dämpfungskonstante des Rohres im Neuzustand verglichen.

Der EP 0 306 110 lässt sich für die Herstellung eines Coriolis-Massendurchflußmeßgeräts ein Verfahren zur Bestimmung der Elastizitätskonstante der als Messrohre verwendete Rohre entnehmen. Dabei wird ein Ende des Messrohrs durch einen Stoß angeregt und die Laufzeit der entstehenden Wellen - P-Wellen (Druck- oder Dehnungswellen) und S-Wellen (Schubwellen) - von einem Ende des Messrohrs zum anderen Ende des Messrohrs wird bestimmt.

Daher ist es die Aufgabe der Erfindung, ein derartiges Verfahren zur Prüfung eines Coriolis-Massendurchflußmeßgeräts anzugeben, mit dem unabhängig von einem ein Meßrohr durchströmenden Medium eine Funktionsüberprüfung durchgeführt werden kann.

Ausgehend von dem eingangs beschriebenen Verfahren ist diese Aufgabe dadurch gelöst, daß als vorbestimmte Schwingungsanregung eine transiente Anregung vorgesehen ist und daß aus einem aufgenommenen Signal eine Mehrzahl von Eigenfrequenzen und die zugehörigen Dämpfungsfaktoren frequenzselektiv erfaßt werden.

Erfindungsgemäß ist also vorgesehen, daß für die erfaßte Schwingungsantwort auf die vorbestimmte Schwingungsanregung eine zuvor bestimmte Referenz verwendet wird. Dabei kann diese Referenz-Schwingungsantwort zuvor bei demselben oder einem anderem Coriolis-Massendurchflußmeßgerät derselben Art erfaßt worden sein. Es können also einerseits die zeitlichen Änderungen bei einem bestimmten Coriolis-Massendurchflußmeßgerät beobachtet werden, andererseits kann jedoch auch ein Vergleich mit einem idealen Gerät durchgeführt werden, das die Referenz-Schwingungsantwort bestimmt.

Dabei ist wesentlich, daß zusätzlich bzw. alternativ zu dem Meßrohr des Coriolis-Massendurchflußmeßgeräts auch von dem Meßrohr verschiedene Einrichtungen einer Schwingungsanregung unterzogen werden können. Insbesondere zur Schwingungsanregung des Meßrohrs kann auf einen bei einem Coriolis-Massendurchflußmeßgerät typischerweise schon vorhandenen Schwingungserzeuger zurückgegriffen werden. Es können jedoch auch separate Schwingungserzeuger vorgesehen sein, mit denen andere Bauteile des Massendurchflußmeßgeräts angeregt werden können. Entsprechendes gilt für einen Schwingungsaufnehmer zur Aufnahme der Schwingungsantwort.

Als Schwingungsantwort wird das erzeugte Frequenzspektrum erfaßt. Zusätzlich ist vorgesehen, als Schwingungsantworten die Dämpfungsfaktoren frequenzselektiv für eine Mehrzahl von Eigenfrequenzen zu erfassen.

Als Schwingungsanregung wird eine transiente Anregung verwendet. Eine derartige transiente Anregung kann z. B. in einem einzelnen Stoß oder Schlag mit einem Gegenstand, wie einem Hammer, bestehen.

Alternativ und nicht gemäß der Erfindung ist als vorbestimmte Schwingungsanregung eine kontinuierliche Anregung mit einem vorbestimmten Frequenzspektrum vorgesehen. Dabei kann grundsätzlich die Verwendung einer Vielzahl von Frequenzen vorgesehen sein. Gemäß einer Weiterbildung ist jedoch vorgesehen, daß das vorbestimmte Frequenzspektrum genau eine Frequenz aufweist. Während bei einer transienten Anregung in der Schwingungsantwort typischerweise eine Mehrzahl von Eigenfrequenzen zu finden ist, kann mit einer kontinuierlichen Anregung mit vorzugsweise genau einer Frequenz eine erzwungene Schwingung erzeugt werden, die außerhalb einer Resonanzfrequenz liegt. Dies kann insofern vorteilhaft sein, als daß damit bestimmte mechanische Charakteristiken des Coriolis-Massendurchflußmeßgeräts ermittelt werden können, die über die Beobachtung von Eigenfrequenzen nur schwer zugänglich sind.

Die erfaßten Schwingungsantworten können auf unterschiedliche Weisen ausgewertet werden. Gemäß einer bevorzugten Weiterbildung der Erfindung ist dabei vorgesehen, die Abweichungen der erfaßten Schwingungsantwort von der zuvor erfaßten Schwingungsantwort zu ermitteln, wozu verschiedene Verfahren verwendet werden können, wie Verfahren der zeitabhängigen FourierTransformation.

Ganz besonders bevorzugt ist nun vorgesehen, daß auf der Grundlage der ermittelten Abweichungen automatisch eine Beurteilung des Massendurchflußmeßgeräts erfolgt. Dabei kann diese Beurteilung vorzugsweise eine Beurteilung der Einsatzbereitschaft des Coriolis-Massendurchflußmeßgeräts umfassen. Die Beurteilung der Einsatzbereitschaft des Coriolis-Massendurchflußßmeßgeräts bedeutet dabei insbesondere, daß ermittelt wird, ob ein ursprünglich vorhandener Kalibrierzustand immer noch vorhanden ist. Übersteigen also die ermittelten Abweichungen vorbestimmte Schwellwerte, so wird angezeigt, daß eine Nachkalibrierung des Coriolis-Massendurchflußmeßgeräts erforderlich ist.

Die Beurteilung des Coriolis-lVlassendurchflußmeßgeräts kann gemäß einer bevorzugten Weiterbildung der Erfindung jedoch auch eine konkrete Diagnose umfassen, im Rahmen derer ein wahrscheinlicher Fehler im Massendurchflußmeßgerät ausgegeben wird. Grundlage für eine solche Diagnose kann gemäß einer bevorzugten Weiterbildung der Erfindung eine "Bibliothek" von Schwingungsantworten sein, die jeweils für einen bestimmten Fehler typisch sind, Diese für jeweils einen bestimmten Fehler typischen Schwingungsantworten können dabei einerseits zuvor erfaßt worden sein, andererseits jedoch auch rechnerisch ermittelt worden sein.

Schließlich sei darauf hingewiesen, daß ein Einsatz des erfindungsgemäßen Verfahrens insbesondere vorgesehen sein kann bei der Herstellung eines Coriolis-Massendurchflußmeßgeräts, also in verschiedenen Herstellungsstufen, in denen jeweils eine bestimmte Referenz-Schwingungsantwort erzielt werden soll. Nur wenn die jeweilige Referenz-Schwingungsantwort mit vorbestimmten Fehlertoleranzen erzielt wird, kommt das Gerät in die nächste Herstellungsstufe. Ansonsten muß das Gerät so lange nachgebessert werden, bis die jeweilige Referenz-Schwingungsantwort mit den vorbestimmten Fehlertoleranzen erzielt oder das Gerät als Ausschuß behandelt wird.

Im einzelnen gibt es eine Vielzahl von Möglichkeiten, das erfindungsgemäße Verfahren auszugestalten und weiterzubilden. Dazu wird auf die Patentanspruch 1 nachgeordneten Patentansprüche sowie auf die nachfolgende detaillierte Beschreibung bevorzugter Ausführungsbeispiele unter Bezugnahme auf die Zeichnung verwiesen. In der Zeichnung zeigt
- Fig. 1: schematisch ein Coriolis-Massendurchflußmeßgerät zur Vervendung mit dem erfindungsgemäßen Verfahren und
- Fig. 2: schematisch die Beurteilung eines Coriolis-Massendurchflußmeßgeräts auf der Grundlage der erfaßten Abweichungen der Schwingungsantwort.

Bei der Herstellung eines Coriolis-Massendurchflußmeßgeräts tritt eine Mehrzahl von Anforderungen an Bautoleranzen, Materialeigenschaften und andere Herstellungsparameter auf. Doch selbst wenn all diese Anforderungen erfüllt werden, kann nicht ausgeschlossen werden, daß das Massendurchflußmeßgerät schließlich nicht den Anforderungen genügt und daher nachbearbeitet werden muß oder gar nicht verwendet werden kann. Im Zusammenspiel der Vielzahl von Herstellungsparametem können nämlich schon geringfügigste Abweichungen zu einem derartigen Gerät führen, das eine nicht mehr hinreichende Meßgenauigkeit aufweist.

Darüber hinaus gilt auch beim Einsatz eines Coriolis-Massendurchflußmeßgeräts im Meßbetrieb, daß Unwägbarkeiten auftreten können, die den Betrieb des Massendurchflußmeßgeräts beeinflussen. Auf diese Weise kann z. B. der Kalibrierzustand des Coriolis-Massendurchflußmeßgeräts verloren gehen, so daß die erzielten Meßergebnisse nicht mehr verläßlich sind.

Mit der vorliegenden Erfindung wird es nun auf einfache Weise ermöglicht, ein Coriolis-Massendurchflußmeßgerät hinsichtlich der zuvor genannten Problematiken sowohl bei seiner Herstellung als auch im eigentlichen Meßbetrieb zu überprüfen. Dazu werden vorbestimmte Schwingungsanregungen des Coriolis-Massendurchflußmeßgeräts verwendet, die zu Schwingungen in einer Eigenfrequenz oder in einer Mehrzahl von Eigenfrequenzen des Coriolis-Massendurchflußmeßgeräts führen, oder die dazu führen, daß das Coriolis-Massendurchflußmeßgerät erzwungene Schwingungen ausführt.

Dazu wird das Coriolis-Massendurchflußmeßgerät vorzugsweise in einer dafür geeigneten Vorrichtung eingespannt, z. B. ähnlich wie bei einem Einbau in ein Rohrleitungssystem. Dies gilt für die Überprüfung eines Coriolis-Massendurchflußmeßgeräts während seines Herstellungsverfahrens. Ein Coriolis-Massendurchflußmeßgerät, das sich schon im Meßbetrieb befindet, kann dementsprechend in das jeweilige Rohrleitungssystem eingebaut bleiben. Es ist also nicht erforderlich, zur Anwendung des erfindungsgemäßen Verfahrens das Coriolis-Massendurchflußmeßgerät aus dem Rohrleitungssystem, in das es zum Meßbetrieb eingebaut ist, wieder auszubauen.

Erfindungswesentlich ist nun, daß aufgrund der vorbestimmten Schwingungsanregung wenigstens einer Einrichtung des Coriolis-Massendurchflußmeßgeräts eine Schwingungsantwort erzielt und erfaßt wird, die als "Fingerabdruck", d. h. als charakteristisches Schwingungsmuster, dient. Der Vergleich des jeweils erfaßten "Finderabdrucks" mit einem zuvor erfaßten "Fingerabdruck" kann dann dazu dienen, Abweichungen von einer Referenz bzw. mit der Zeit im Coriolis-Massendurchflußmeßgerät aufgetretene Veränderungen zu detektieren. Grundsätzlich ist nämlich davon auszugehen, daß praktisch jede mechanische Änderung im Cofiolis-Massendurchflußmeßgerät zu einer Änderung des "Fingerabdrucks" führt. Auf diese Weise wird ein sehr sensibles Prüfverfahren bereitgestellt, mit dem selbst kleinste Abweichungen des Coriolis-Massendurchflußmeßgeräts gegenüber einer Referenz erfaßt werden können.

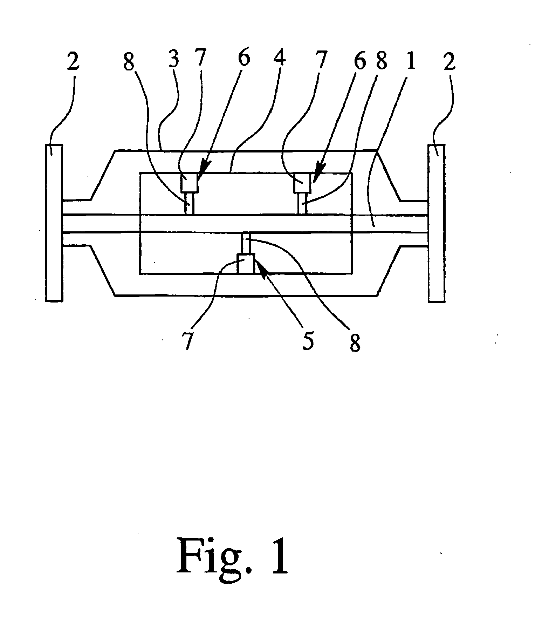

Bei einem aus Fig. 1 ersichtlichen, für das erfindungsgemäße Verfahren geeigneten Coriolis-Massendurchflußmeßgerät ist z. B. ein einziges, gerades Meßrohr 1 vorgesehen, das mittels Flansche 2 in ein nicht weiter dargestelltes Rohrleitungssystem eingebaut werden kann. Das Coriolis-Massendurchflußmeßgerät weist ein Gehäuse 3 auf, innerhalb dessen ein Innenzylinder 4 vorgesehen ist, der den mittleren Bereich des Meßrohrs 1 umschließt und als Widerlager für einen Schwingungsanreger 5 sowie zwei Schwingungssensoren 6 dient. Diese bestehen jeweils aus einer Magnetspule 7 und einem in der Magnetspule 7 angeordneten Magneten 8, der auf das Meßrohr 1 einwirkt bzw. dessen Schwingungen folgt.

Bei einem derartigen Coriolis-Massendurchflußmeßgerät kann zur Erfassung der Schwingungsantwort nun ein Schwingungssensor 6 verwendet werden, wenn die vorbestimmte Schwingungsanregung das Meßrohr 1 betrifft. Zur Erfassung der durch die vorbestimmte Schwingungsanregung erzielten Schwingungsantwort kann aber auch eine Vielzahl von weiteren Verfahren eingesetzt werden, einschließlich der Verwendung von Beschleunigungssensoren, akustischer Meßverfahren, der Verwendung optischer Interferenzmuster und andere optische Verfahren z. B. unter Verwendung faseroptischer Sensoren, die zur Messung der Schwingungsauslenkungen dienen.

Zur Erfassung eines "Fingerabdrucks" eines Coriolis-Massendurchflußmeßgeräts kann gemäß einem bevorzugten Ausführungsbeispiel der Erfindung nun derart vorgegangen werden, daß das Coriolis-Massendurchflußmeßgerät eine transiente Schwingungsanregung, z. B. durch einen Stoß, erfährt. Dazu ist das Coriolis-Massendurchflußmeßgerät vorzugsweise senkrecht zu seiner Schwingungsauslenkung eingespannt. Dann wird das abklingende Schwingungssignal der freien Schwingung z. B. mittels eines Mikrophons oder eines an dem Meßrohr 1 befestigten elektromagnetischen Sensors erfaßt. Aus dem aufgenommenen Signal können die Eigenfrequenzen und die zugehörigen Dämpfungsfaktoren mittels zeitabhängiger Fourier-Transformation (FFT) ermittelt werden. Damit kann der "Fingerabdruck" mittels einer Anzahl von 2D Punkten (fᵢ, ζᵢ) beschrieben werden, wobei fᵢ die Eigenfrequenzen und ζᵢ die zugehörigen Dämpfungsfaktoren bei diesen Frequenzen sind.

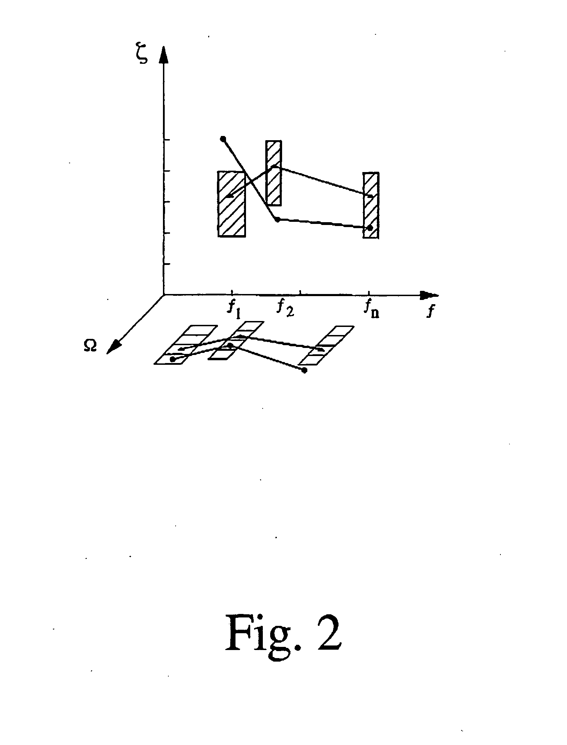

Eine entsprechende Überprüfung des "Fingerabdrucks" des Coriolis-Massendurchflußmeßgeräts wird z. B. zu drei aufeinanderfolgenden Stufen im Herstellungsverfahren des Geräts durchgeführt. Die Qualität der Coriolis-Massendurchflußmeßgeräte kann nun anhand dieser "Fingerabdrücke" durch einen automatischen Vergleich mit einem Referenz-Gerät ermittelt werden. Entsprechendes ist schematisch in Fig. 2 gezeigt. Dort sind für verschiedene Eigenfrequenzen f₁, f₂, ... fₙ erlaubte Frequenzabweichungen sowie zugehörige, zulässige Dämpfungsfaktoren ζ dargestellt. Fallen die für ein Gerät ermittelten Werte nicht in die schraffiert dargestellten zulässigen Bereiche, so müssen diese Geräte nachbearbeitet oder ausgesondert werden.

In Fig. 2 zeigen die durch Dreiecke dargestellten Meßwerte solche Meßwerte, die innerhalb der Spezifikation liegen. Das zugehörige Gerät kann also für den Meßbetrieb verwendet oder weiterverwendet werden. Im Gegensatz dazu liegt das Meßgerät, dessen zugehörige Meßwerte mit Kreisen dargestellt sind, außerhalb der zulässigen Spezifikation, so daß hier eine Nachbearbeitung bzw. eine Neukalibrierung erforderlich ist. Im übrigen ist aus Fig. 2 ersichtlich, daß neben der Dämpfung auch weitere, frequenzabhängige Parameter verwendet werden können, die exemplarisch mit Ω bezeichnet sind.

In Abweichung von dem zuvor beschriebenen bevorzugten Ausführungsbeispiel der Erfindung ist es gemäß einem anderen bevorzugten Ausführungsbeispiel der Erfindung auch möglich, das Coriolis-Massendurchflußmeßgerät zu erzwungenen Schwingungen anzuregen, und zwar bei einer einzigen Schwingung oder bei mehreren verschiedenen Schwingungen.

Gemäß einem weiteren bevorzugten Ausführungsbeispiel der Erfindung ist es schließlich auch möglich, das Coriolis-Massendurchflußmeßgerät mit Ultraschallsignalen zu beaufschlagen, um das Frequenzspektrum zu erhalten, das von direkten und reflektiven Moden der Ultraschallsignale erzeugt wird. Da die Wellenlängen der Ultraschallsignale wesentlich kürzer sind als durch mechanische Schwingungsanregungen des Coriolis-Massendurchflußmeßgeräts erzielbar, können auf diese Weise noch wesentlich sensiblere Untersuchungsergebnisse erzielt werden.

Gemäß einem bevorzugten Ausführungsbeispiel der Erfindung ist es darüber hinaus vorgesehen, eine "Bibliothek von Fingerabdrücken" zu erstellen und für die Fehlerdiagnose zu verwenden, Dabei werden bestimmte, charakteristische Fingerabdrücke typischen Fehlern bei den Coriolis-Massendurchflußmeßgeräten zugeordnet, also typischen Abweichungen von der Referenz. Eine solche "Bibliothek von Fingerabdrücken" kann auf Erfahrungswerten beruhen. Es ist jedoch auch möglich, eine derartige "Bibliothek" mittels rechnerischer Verfahren zur erstellen.

## Patentansprüche

1. Verfahren zur Prüfung eines Massendurchflußmeßgeräts, das nach dem Coriolis-Prinzip arbeitet, wobei eine Einrichtung des Massendurchflußmeßgeräts eine vorbestimmte Schwingungsanregung erfährt die damit verbundene Schwingungsantwort erfaßt wird und die erfaßte Schwingungsantwort mit einer zuvor erfaßten Schwingungsantwort verglichen wird,
**dadurch gekennzeichnet,**
**daß** als vorbestimmte Schwingungsanregung eine transiente Anregung vorgesehen ist und daß aus einem aufgenommenen Signal eine Mehrzahl von Eigenfrequenzen und die zugehörigen Dämpfungsfaktoren frequenzselektiv erfaßt werden.

2. Verfahren nach Anspruch 1, **dadurch gekennzeichnet, daß** die Abweichungen der erfaßten Schwingungsantwort von der zuvor erfaßten Schwingungsantwort ermittelt werden.

3. Verfahren nach Anspruch 2, **dadurch gekennzeichnet, daß** auf der Grundlage der Abweichungen automatisch eine Beurteilung des Massendurchflußmeßgeräts durchgeführt wird.

## Claims

1. Method for testing a mass flowmeter functioning according to the Coriolis principle, wherein an apparatus of the mass flowmeter is subjected to a predetermined oscillation excitation and the associated oscillation response is recorded and the recorded oscillation response is compared to a previously recorded oscillation response
**characterized in**
**that** a transient excitation is provided as predetermined oscillation excitation and that several eigenfrequencies and the associated damping factors are recorded from one recorded signal.

2. Method according to claim 1, **characterized in that** deviations of the recorded oscillation response from the previously recorded oscillation response are determined.

3. Method according to claim 2, **characterized in that**, based on the deviations, an assessment of the mass flowmeter is carried out automatically.

## Revendications

1. Procédé pour le contrôle d'un débitmètre massique qui fonctionne selon le principe de l'effet de Coridis, un dispositif du débitmètre massique étant soumis à une excitation d'oscillation prédéterminée, la réponse d'oscillation associée étant détectée et la réponse d'oscillation détectée étant comparée à une réponse d'oscillation détectée préalablement,
**caractérisé en ce que**
l'on prévoit en tant qu'excitation d'oscillation prédéterminée une excitation transitoire et **en ce que** l'on détecte, de façon sélective en fréquence, à partir d'un signal reçu, une pluralité de fréquences propres et les facteurs d'amortissement associés.

2. Procédé selon la revendication 1, **caractérisé en ce que** l'on détermine les écarts de la réponse d'oscillation détectée par rapport à la réponse d'oscillation détectée préalablement.

3. Procédé selon la revendication 2, **caractérisé en ce que** sur la base des écarts, on effectue automatiquement une évaluation du débitmètre massique.
